# EUROPEAN PATENT APPLICATION

(11) **EP 3 493 344 A1**
(43) Date of publication of application: **05.06.2019**
(21) Application number: 17382814.6
(22) Date of filing: 01.12.2017
(51) Int. Cl.: H02J 3/00, H02J 3/46, H02J 13/00

(54) **METHOD, SYSTEM AND COMPUTER PROGRAMS FOR SCHEDULING ENERGY TRANSFER IN A DISTRIBUTED PEER-TO-PEER ENERGY NETWORK**

(71) Applicant: Telefonica Innovacion Alpha S.L, 28013 Madrid (ES)
(72) Inventor: Phoel, Wayne, 28013 Madrid (ES); Pilaszanovich, Jakab, 28013 Madrid (ES); García Mendoza-Sánchez, Armando Antonio, 28013 Madrid (ES); Stalling, Lars, 28013 Madrid (ES); Rodriguez Rodriguez, Pablo, 28013 Madrid (ES)
(74) Representative: Carlos Hernando, Borja

(57) **Abstract**

The method comprises determining, by each one of a plurality of energy controllers, each located in a node a1) a prediction of the availability of electrical energy in the node, a2) a prediction of the demand in the node, and a3) a prediction of an electrical energy storage of the node; b) determining, by each energy controller, different or equal amounts of electrical energy to be transferred to the one or more devices included in its node by implementing a policy-based prioritization algorithm; c) sharing, the predictions determined in step a) with the other energy controllers; d) receiving, by a first energy, from a second node, a request for receiving a specific amount of electrical energy; and e) scheduling, by the first energy controller, a time for providing the amount of electrical energy requested to said at least one second node based on the determinations made in steps a) and b).

## Description

### Field of the invention

The present invention generally relates to distributed energy networks. In particular, present invention relates to a method, a system, and computer programs for scheduling electrical energy transfer in a peer-to-peer distributed energy network, in which several nodes are connected and contain one or more devices including electrical energy generation elements, electrical energy storage elements and/or electrical energy loads.

### Background of the invention

Document Energy trading model for optimal microgrid scheduling based on genetic algorithm', Chen Changsong et al. 2009 IEEE 6th International Power Electronics and Motion Control Conference, discusses predicting energy generation based on weather data and historical generation; it includes distributed generation, storage, and loads and also includes a "start-up" cost for generation, but it does not account for losses in wires, voltage conversion, or battery cycling.

Document 'Optimal scheduling of microgrid operation considering the time-of-use price of electricity', Mishel Mahmoodi et al. IECON 2013 - 39th Annual Conference of the IEEE Industrial Electronics Society, discusses price-based trading between a microgrid and the conventional utility-run electric grid; it accounts for generation, storage, and loads in the microgrid and addresses the relative costs of local generation and grid-provided electricity for charging batteries.

Document 'Optimal scheduling of distributed energy resources in energy market', Srinka Basu et al. 2015 Annual IEEE India Conference (INDICON), considers a double auction for electricity prices between users and producers, which include both distributed renewables in the microgrid and the utility-run conventional power grid; includes priorities for loads: low priority loads are generally schedulable loads while the high priority load demands are non-schedulable and have to be met all the time. Document 'Renewable Energy Pricing Driven Scheduling in Distributed Smart Community Systems', Yang Liu and Shiyan Hu, IEEE Transactions on Parallel and Distributed Systems, considers community-based distributed energy systems in which consumers compete for lower-priced renewable energy; it describes a mechanism based on pricing for fairly allocating energy from renewable sources to consumers.

Document 'Cooperative distributed energy scheduling for storage devices and renewables with resiliency against intermittencies', Navid Rahbari-Asr et al. 2016 IEEE 25th International Symposium on Industrial Electronics (ISIE), proposes a fully distributed approach for optimal scheduling of storage devices that is resilient against intermittencies. The only cost index considered is the electricity bill; the microgrid sells and buys energy to/from the macro-grid. The optimizations find the charging/discharging set points for the storage devices such that the operational cost of the microgrid over a certain number of time steps is minimized and to improve the resiliency of the algorithm against intermittencies.

Document 'Microgrid cooperative distributed energy scheduling (CoDES) considering battery degradation cost', Yuan Zhang et al., 16 IEEE 25th International Symposium on Industrial Electronics (ISIE), considers a single entity-owned grid-connected microgrid with renewable and battery integration is considered, such as theme parks and university campuses. For these types of microgrids, an energy scheduling problem is formulated with the objective being to minimize the total daily operating cost of the entire microgrid, while considering battery degradation cost. As batteries have limited cycle life under different depth of discharge (DoD) scenarios, daily battery cycling will result in battery wear and sometimes it may not be economical to use batteries due to the degradation cost associated with them.

Document 'Cooperative distributed energy scheduling for smart homes applying stochastic model predictive control' Mehdi Rahmani-andebili and Haiying Shen, 2017 IEEE International Conference on Communications (ICC), proposes cooperative distributed energy scheduling approach that is applied to solve this problem for the set of the smart homes (SHs). In this method, every SH takes into account its available energy resources such as DG, PV panels, and battery of plug- in electric vehicle (PEV), collects the information of the available energy of the connected SHs and their proposed prices, and conducts the energy scheduling in a cooperative distributed way. It is assumed that every SH can exchange the information just with its connected SHs.

At every time step, in parallel to other SHs, every SH randomly selects its counterpart (one of the connected SHs), and solves its own energy scheduling problem considering the received information from the selected cooperator. Then, every SH randomly changes its cooperator and shares the updated information with one another. This process is repeated several times until no significant improvement is observed in the value of the objective function of each SH.

The historical values of the solar irradiances are entered into the neural network to predict the values of the solar irradiances over the optimization time horizon.

The optimization does not consider losses. It does not allow for prioritization of loads or for adapting schedules of loads. The only storage considered is a plug-in electric vehicle that can be unplugged and driven. The optimization does attempt to account for effects of reduced life by cycling batteries.

Document 'The role of energy storage in local energy markets', Esther Mengelkamp et al. Published in the European Energy Market (EEM), 2017, discloses that the market offers a decentralized marketplace for procuring electricity directly from local renewable generation. They evaluate the market efficiency in terms of the attained rate of self-consumption and the average electricity price depending on the number of potential trading partners in two scenarios: A local market without energy storage and a local market with a community energy storage. The results indicate that a community energy storage can substantially increase the market's efficiency. Despite calling it a decentralized market, the formulation assumes separate users and generators.

Document 'Trading on local energy markets: A comparison of market designs and bidding strategies', Esther Mengelkamp et al. Published in the European Energy Market (EEM), 2017, introduces a local market which allows prosumers and consumers (in short: agents) to trade electricity directly within their community at variable prices. The market aims at facilitating a local balance of energy supply and demand. They present and compare two market designs, a direct peer-to-peer (P2P) market and a centralized order book market, with the objective of assessing which design is best suited for a local electricity market.

In every time slot, each buying consumer is randomly paired with selling prosumers in an iterative fashion until she has procured all of her electricity or has been paired with all potential sellers.

The problem formulation does not allow for prioritization of different users or loads, different levels of service, or fairness.

In low-income regions, viable solutions need to consider costs of every component. Most of the systems considered in the prior art don't worry about costs of wires, and are not so concerned about transmission and conversion losses, however these can have a significant effect on the optimization in low-margin electricity networks.

In addition, most systems considered assume there is some access to the conventional grid and the renewables are only preferred as lower cost alternatives when available. But, in developing regions, there may not be access to any centralized utility and not having that back-up significantly changes the decisions in how to schedule electricity distribution, including greater emphasis on prioritization and different levels of service.

The systems that have been proposed for complete disconnection from traditional power grids replicate that centralized architecture on a smaller scale and do not trade energy among users.

### Description of the Invention

Embodiments of the present invention provide according to an aspect a method for scheduling energy transfer in a distributed peer-to-peer energy network, wherein said energy network is adapted for the distribution of electrical energy and comprises a plurality of connected nodes, and wherein each node comprises one or more devices including electrical energy generation elements, electrical energy storage elements and/or electrical energy loads.

The proposed method comprises a) determining, by each one of a plurality of energy controllers, each being located in a node of the plurality of nodes of the energy network a1) a prediction of the availability of electrical energy in the node by at least considering the type of electrical energy generation element generating the electrical energy in the node and historical electrical energy data captured over a period of time, a2) a prediction of the demand in the node by considering the type of electrical energy loads included in the node and ranges for their power needs, and a3) a prediction of an electrical energy storage of the node.

Moreover, each one of the plurality of energy controllers also comprises b) determining, different or equal amounts of electrical energy to be transferred to the one or more devices included in its node by implementing a policy-based prioritization algorithm; and c) sharing the predictions determined in step a) with the other energy controllers.

Furthermore, the method also comprises the reception, by one first energy controller located in a first of the nodes, from a second node, a request for receiving a specific amount of electrical energy, the first energy controller scheduling a time for providing the amount of electrical energy requested to said second node based on the determinations made in steps a) and b).

In an embodiment, the method further comprises providing the scheduled amount of electrical energy to the second node. This can be done by the first energy controller taking into account a moment of least traffic in the energy network. Moreover the transfer can be provided at several, different or equal, power levels.

In an embodiment, the predictions of step a) are determined at different variable timescales such as days, hours and/or seconds.

In an embodiment, the prediction of step a1) are also determined by further considering external information of the energy network including weather predictions.

The policy-based prioritization algorithm may comprise implementing a weighted fair prioritization process where weights each device has are determined by optimizing an arbitrary, and changeable, utility function. Moreover, it can comprise assigning a cost to electrical energy for different devices as a function of time and optimizing based on total cost.

In an embodiment, the predictions of step a) are determined by the nodes reserving a given amount of electrical energy for a future period. Alternatively, the predictions are determined by the nodes pre-caching a given amount of electrical energy.

In an embodiment, the electrical energy transfer request is received upon a cost of the electrical energy falls below a certain threshold. In another embodiment, the transfer request is received upon the prediction of step a1) or step a3) for the second node falls below a certain threshold or upon the prediction of step a2) falls above a certain threshold.

Embodiments of the present invention also provide according to another aspect a system configured to perform the method embodiment steps and operations summarized above and disclosed in detail below.

Other embodiments of the invention that are disclosed herein also include software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

According to the present invention, the electrical energy generation elements may include solar panels, diesel generation systems, geothermal systems or a human-powered crank generator, among others. The energy storage elements may include batteries, capacitors and/or elevated weight including water, among others. Finally, the electrical energy loads may include lighting systems and/or appliances including kitchen appliances, televisions, radios, refrigerators and/or heating equipment, among others.

Present invention enables a much more efficient distribution of electricity in a resource-constrained, peer-to-peer network that cannot rely on a major power grid for backup. In addition, is a cost-constrained situation, as is encountered in developing communities, the invention enables a much more flexible allocation of energy by way of allowing multiple levels of service and prioritization of demands. Specifically, the invention enables a scalable, self-sufficient network of distributed generation, storage, and loads, without access to a conventional centralized power grid, and it optimizes performance in low-cost, low-voltage scenarios in which component losses (wires, voltage conversion, etc.) can be significant factors.

### Brief Description of the Drawings

The previous and other advantages and features will be more fully understood from the following detailed description of embodiments, with reference to the attached drawings, which must be considered in an illustrative and non-limiting manner, in which:
Fig. 1 is a schematic illustration of the main components of the proposed system for scheduling energy transfer in a distributed peer-to-peer energy network.
Fig. 2 is a schematic illustration of the prioritization process implemented by the energy controller(s) in order to determine different or equal amounts of electrical energy to be transferred to the one or more devices included in the node.
Fig. 3 illustrates a first exemplary embodiment of the proposed method.
Figs. 4A and 4B illustrate a second exemplary embodiment of the proposed method.

### Detailed Description of the Invention and of Preferred Embodiments

Present invention provides a method, and corresponding system for scheduling transfer(s) of electrical energy in a peer-to-peer distributed energy network in order to minimize the stress levels of the infrastructure. In particular, present invention considers the case in which a group of homes or other entities (hereafter referred as nodes) may contain one or more devices including a combination of some or all of the following: electrical energy generation elements (e.g. solar panels, diesel generation, geothermal, human-powered crank), electrical energy storage elements (e.g. batteries, capacitors, elevated weight such as water) and electrical energy loads (e.g., lights, refrigerators, heating equipment, home appliances). In addition, these nodes are connected through an energy network capable of transporting energy.

The scheduling functions can initiate a transaction when specified criteria are met. The criteria can be defined in several ways, including triggering a transaction when electrical energy costs fall below a certain level, when a node requests immediate transfer of energy (for instance because the node does not have electrical energy available in their storage elements or because the node needs a certain transfer for powering one of its appliances, these different criteria can be considered using different thresholds), or at what time instant it is worth transferring energy over the network based on previously generated prediction models. The prediction models take into account historical consumption data on the nodes and optionally future bids and are generated based on rich data sets compiled over time from sensors in the node. In addition, the amount of electrical energy to be transferred at a given time may be throttled based on infrastructure limitations, such as wire losses, battery cycle limits, or other aspects.

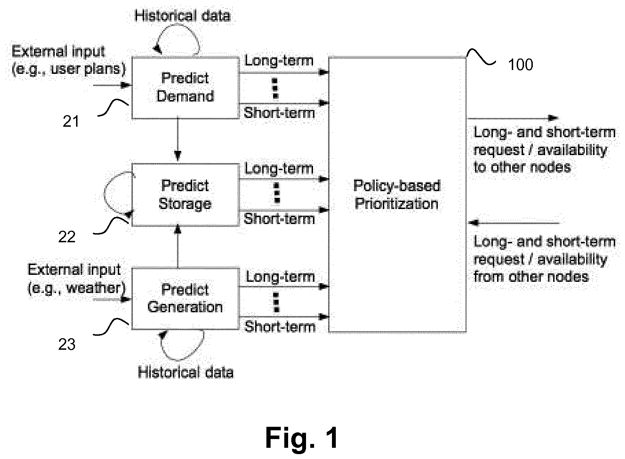

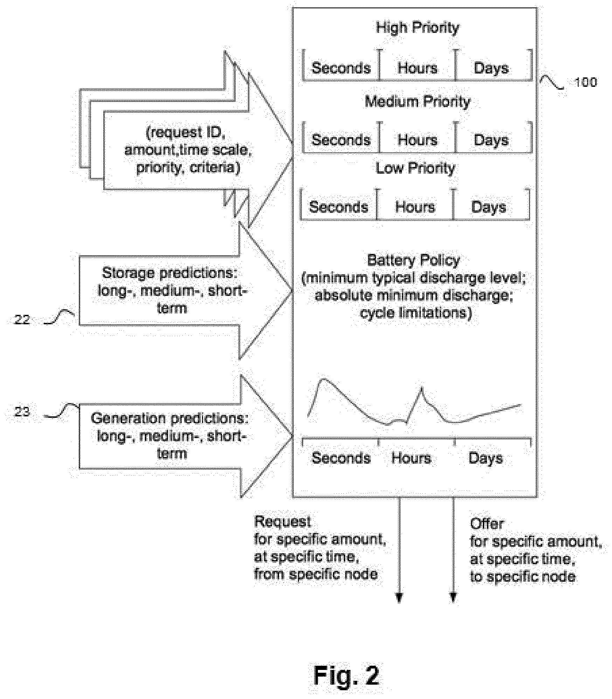

Figs. 1 and 2 illustrate an embodiment of the present invention. As can be seen in Fig. 1, a set of predictions are determined by each node. In particular, predictions deal with availability of electrical energy 23, with demand 21, and also with capacities of storage 22. Electrical energy availability 23 is preferably determined by the type of generation elements (e.g. generator, solar panel, wind turbine, etc.) and historical data captured in the energy network over time. The predicted availability 23 can optionally also account for external information such as weather predictions, if available.

Similarly, demand prediction 21 is determined by the type of appliances connected in the nodes (e.g., lights, phone chargers, refrigerator, etc.) and ranges for their power needs (in terms of voltage, power, duty cycle, etc.). The predictions leverage past usage data, as well, to determine expected power demand for each class of appliance and can vary depending on day of the week, time of day, time of the year, and other external factors such as weather and known upcoming events, if available.

Electrical energy storage 22 is treated differently because it can be both a source and sink for electrical energy. It is also dependent on the predictions for the other two categories in that it will require extra electrical energy to be stored if predicted demand exceeds predicted availability, or it may require shedding or redistributing electrical energy if local generation exceeds anticipated demands.

The timescale on which predictions are made can vary, but there will typically be two or three scales at which availability is predicted: days, hours, and/or seconds.

Preferably, predictions are made by an energy controller 100 (which can include one or more processors, a memory unit, among other means or interfaces) located, or installed, in each of the nodes of the energy network. That is, the predictions are made locally, in which case sufficient statistics and resulting predictions must be distributed across the energy network. Since many electrical energy transactions are expected to be limited to local neighbor nodes in distributed peer-to-peer systems, the state dissemination from a given node need not extend to the entire energy network.

The energy controller 100 is configured to work by several inputs; the inputs can be manually entered by a user through a user interface, or from network-aware appliance through an API, or from a local control processor.

Day-scale predictions capture variations in generation and usage from day-to-day based on cloud cover and time of year (temperatures and duration of sunlight, e.g.). Similarly, wind power varies and can be predicted on longer timescales.

At the hour level, the predictions concern diurnal patterns such as turning lights on in the morning and evening, running refrigeration constantly, as well as variable output of renewable power generation such as solar power generation during the day.

Second-level predictions address immediate requests for power such as when an appliance is turned on, when it may go off, whether solar irradiance is increasing or decreasing, as well as effects such as changes in losses in wires due to current level.

On the other hand, the energy controller(s) 100 also implement, or apply, a policy-based prioritization algorithm. Prioritization addresses the cases in which more electrical energy is requested than available, including accounting for future demand shortfalls. The energy controller(s), by default, can allocate electrical energy as if all devices in the node are the same priority, but superior performance can be obtained by differentiating between different devices. For example, a node could lower the power to lightbulbs to keep a refrigerator going. Or, it could prioritize storing electrical energy in a battery if cloudy days are predicted over powering a television when the sun is shining.

The policy-based prioritization algorithm can take several forms. It can be strict prioritization (e.g., if a refrigerator is highest priority and lights are second highest, always meet requests of the refrigerator, if electrical energy is left after meeting current (and future) refrigerator demand, allocate electrical energy to lights, then to the next highest priority). Or it can follow a weighted fair prioritization, where the weights can be determined by optimizing an arbitrary (and changeable) utility function, either analytically or through simulation, or by assigning a cost (e.g. a monetary value) to electrical energy for different applications as a function of time, and optimizing based on total cost.

Given the predicted needs, availability, and priorities, a node, or nodes, (second node as termed in the claims) then forms a request for either reception, or potentially transmission, of electrical energy, for instance because certain loads are going to be connected at particular times in the node (which is underpowered), and the node foresees the need and form the request. If a load is new to the node, the request may, for the first time, need to contain additional configuration information such as power expectations; otherwise, only updated information need be included.

The request may consist of the amount of electrical energy needed ( preferably expressed as a rate -- i.e. power in Watts -- or volume in Watt-hours, depending on the application), time range in which power is needed or will be available (e.g. 2 Whr anytime between now and 5 pm, or 1 W continuous from 6 am until the sun rises), the priority, whether partial fulfilment is acceptable, or other delivery criteria (e.g. up to 3 Whr when price is less than 1 EUR; or when local storage exceeds 95% of capacity and local generation elements exceeds demand, find a nearby node with battery capacity to offload some electrical energy).

Given the predictions for availability and demand, several approaches are feasible (and which to use depends on the specific priorities and utility function). A node may reserve electrical energy to be transferred later if determined that that electrical energy will be available when needed. Alternatively, a node may "pre-cache" electrical energy if it is available now but needed later, delivering low power over an extended period of time. This period can be hours, if not days. In many cases, the pre-caching will charge batteries or other storage technologies, including inertia-driven storage units. Losses are optimized in a low charging mode and are used to determine adequate levels. If and when losses surpass a predetermined threshold, the pre-caching event or procedure can be stopped. Alternatively, the energy controller(s) may execute a hybrid of these approaches, in which the electrical energy transfer is spread out over time, not necessarily evenly, using a combination of local storage and remote generation to meet the appliance needs. Note also that these schedules can involve multiple sources to meet the demands.

The energy controller(s) will also identify moments of least demand, and those of least traffic in the energy network. These moments will be used to arrange and carry out the self-healing function of the energy network. Ideally, any shifting of electrical energy will take place when the cost for transferring electrical energy is at its lowest levels, where "cost" can take on monetary or other forms as discussed elsewhere.

The Execution of the high-level schedule requires additional scheduling at lower levels of the energy network also. Once it is determined the paths through the energy network that electrical energy will flow, the actual transfer over the physical layer of the energy network needs to be coordinated. This takes into account multiple flows over the same wires, direction of flow, and losses over the wires. The transfer of electrical energy can be done at several power levels. An interface to the higher layer scheduling function alerts of any changes to constraints or costs as specific, short-term transfers are scheduled and executed. This execution typically occurs on the time scale of seconds.

Note a particular link may end up on two paths for two different simultaneous electrical energy transfers. If the two transfers are in opposite directions, only the difference need be sent over the link--the remainder can be handled through bookkeeping in order to avoid losses.

The energy network may also be configured to control the correct and linear charging of batteries and/or to minimize wear on the battery due to deep discharges and excessive cycling.

Present invention may be configured to minimize losses (and consequently maximize efficiency), but also prioritize a user's own devices over providing energy to neighbor nodes.

A simple example of this implementation of the scheduling function executed by the energy controllers 100 involves a user who wants to use lights at night, but has no generation source of its own. The prediction can occur in two ways: (1) the user creates an entry in the energy controller 100 located in its node indicating the intent to use lights for a particular duration that night (or multiple nights); (2) the energy controller 100 has observed the lights on for several previous nights and predicts the current (and possibly future) night will use the same appliance(s)/power.

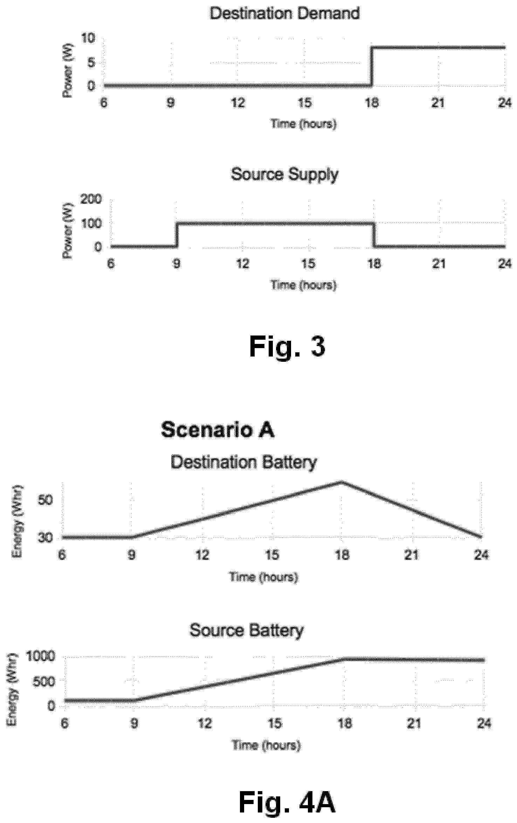

Assume that the user's predicted demand is as shown in Fig. 3 (8 W constant demand from 6 pm until midnight, for a total of 48 Whr); the user is connected to another node who has predicted generation also shown in the figure (96 W constant generation from 9 am until 6 pm, for a total of 864 Whr). Present invention also assumes that the two nodes are connected by a 200 m long wire with resistance 80 ohms per km.

The energy controller 100 minimizes losses by extending the transfer time for as long as possible over the day, using a combination of storage at both the source node (e.g. the first node as termed in the claims) and destination node to average the 48 Whr over 15 hours, for a constant power transfer level of 3.2 W. For simplicity, present invention assumes the actual supply meets the predicted values exactly. In reality, the energy controller 100 will have to adjust the transfers in real-time as actual generation varies from what was predicted. Call this Scenario A (see Fig 4A). At a voltage level for the distribution line of 48 V, 3.2 W corresponds to 0.067 A, which results in a loss of 0.014 W lost on the wire (or a total of 0.2 Whr over the 15 hours).

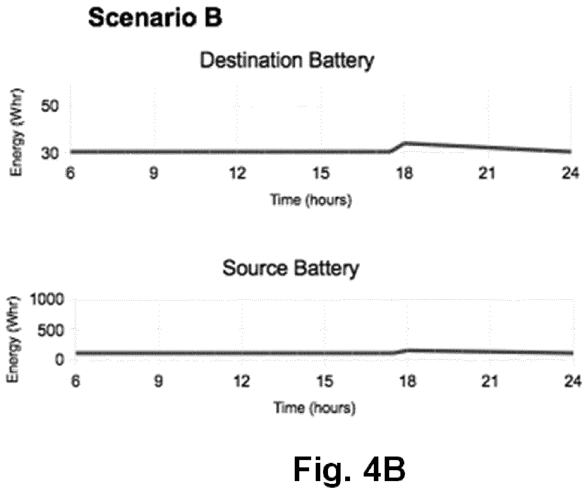

Now, after the original schedule is established, a load attached to the source node is turned on and draws 96 W of power starting at 9 am but the end-time is not initially known. Call this Scenario B (see Fig. 4B). The energy controller 100 then readjusts the schedule to transfer energy to the destination node at a later time. If the unexpected load is turned off at 5:30, the source node now has 6.5 hours to transfer the 48 Whr, corresponding to a rate of 7.4 W. 7.4 W at 48 V corresponds to 0.15 A current, and consequently 0.076 W is lost on the wire (or -0.5 Whr).

Note the node could transfer the electrical energy at the rate it is being generated, 96 W, but that would result in a current of 2.0 A and a corresponding loss of 12.8 W, or over 13% -- this represents extra energy that the source must provide to meet the demand of the user, and therefore would translate into extra costs for the user. So, while the destination must buy the 48 Whr from the source, it is only getting 41.6 Whr (or -87%). If there was excess supply (which there isn't in this third scenario), the source could provide the extra energy to make up for what was lost. Otherwise, the destination node has the choice of using its own battery, getting electrical energy from the source's node battery (at potentially a higher price), or going without and not fully satisfying the load.

An alternative implementation aims for equity/fairness across users and may sacrifice a small fraction of the 96 W load at the source node in order to provide a lower loss transfer of electrical energy to the destination node.

Another alternative implementation uses the energy controller 100 to program maintenance events for the network equipment and send servicing requests to the nodes and/or to the specific devices when they include relevant APIs. The energy controller 100 uses predicted network activity in order to identify the best time and locations for maintenance events. In parallel, the same or related maintenance information can be sent to a central repair team that is close to the node in the field. SMSs to feature phones or smart phone can also be sent.

While the foregoing is directed to embodiments of the present invention, other and further embodiments of the invention may be devised without departing from the basic scope thereof. For example, other aspects may be implemented in hardware or software or in a combination of hardware and software. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is determined by the claims that follow.

## Claims

1. A method for scheduling energy transfer in a distributed peer-to-peer energy network, wherein said energy network being adapted for the distribution of electrical energy and comprising a plurality of connected nodes, and wherein each node comprising one or more devices including electrical energy generation elements, electrical energy storage elements and/or electrical energy loads, the method comprising:
a) determining, by each one of a plurality of energy controllers, each being located in a node of the plurality of nodes of the energy network:
a1) a prediction of the availability of electrical energy in the node by at least considering the type of electrical energy generation element generating the electrical energy in the node and historical electrical energy data captured over a period of time,
a2) a prediction of the demand in the node by considering the type of electrical energy loads included in the node and ranges for their power needs, and
a3) a prediction of an electrical energy storage of the node;
b) determining, by each one of the plurality of energy controllers, different or equal amounts of electrical energy to be transferred to the one or more devices included in the node by implementing a policy-based prioritization algorithm;
c) sharing, by each one of the plurality of energy controllers, the predictions determined in step a) with the other energy controllers;
d) receiving, by at least one first energy controller located in a first node, from at least one second node, a request for receiving a specific amount of electrical energy; and
e) scheduling, by the first energy controller, a time for providing the amount of electrical energy requested to said at least one second node based on the determinations made in steps a) and b).

2. The method of claim 1, wherein the predictions of step a) being determined at different variable timescales including days, hours and/or seconds.

3. The method of previous claims, wherein the prediction of the availability of electrical energy of step a1) being determined by further considering external information of the energy network including weather predictions.

4. The method of previous claims, wherein said policy-based prioritization algorithm of step b) comprises implementing a weighted fair prioritization process where weights each device has are determined by optimizing an arbitrary, and changeable, utility function.

5. The method of claim 4, wherein said policy-based prioritization algorithm of step b) comprises assigning a cost to electrical energy for different devices as a function of time and optimizing based on total cost.

6. The method of claim 1, wherein the predictions of step a) being determined by the nodes reserving a given amount of electrical energy for a future period.

7. The method of claim 1, wherein the predictions of step a) being determined by the nodes pre-caching a given amount of electrical energy.

8. The method of claim 1, further comprising providing the requested amount of electrical energy to the at least one second node by the first energy controller taking into account a moment of least traffic in the energy network.

9. The method of claim 1, further comprising providing, by the first energy controller, the requested amount of electrical energy to the at least one second node, wherein the requested amount of electrical energy being provided at several, different or equal, power levels.

10. The method of claim 1, wherein the energy request being received from a user interface, from a network-aware appliance through an application programming interface or from a local processor.

11. The method of claim 1, wherein the electrical energy transfer request being received upon a cost of the electrical energy falls below a certain threshold.

12. The method of claim 1, wherein the electrical energy transfer request being received upon the prediction of step a1) or step a3) of the second node fall below a certain threshold or upon the prediction of step a2) fall above a certain threshold;

13. A system for scheduling energy transfer in a distributed peer-to-peer energy network, said system comprising:
a plurality of connected nodes of an energy network, wherein said energy network being configured and adapted for the transport of electrical energy and wherein each of said plurality of nodes comprising one or more devices including electrical energy generation elements, electrical energy storage elements and/or electrical energy loads; and
a plurality of energy controllers (100), each being located in a node of the plurality of nodes of the energy network, and each being adapted and configured to:
i) determine a prediction of the availability of electrical energy (23) in the node by at least considering the type of electrical energy generation element generating the electrical energy in the node and historical electrical energy data captured over a period of time, a prediction of the demand (21) in the node by considering the type of electrical energy loads included in the node and ranges for their power needs, and a prediction of an electrical energy storage (22) of the node;
ii) determine different or equal amounts of electrical energy to be transferred to the one or more devices included in its node by implementing a policy-based prioritization algorithm; and
iii) schedule a time for providing an amount of electrical energy requested by another node based on the determinations made in steps i) and ii).

14. The system of claim 13, wherein:
the electrical energy generation elements at least include one of solar panels, diesel generation systems, geothermal systems or a human-powered crank generator;
the energy storage elements at least include one of batteries, capacitors and elevated weight including water; and
the electrical energy loads at least include one of lighting systems and appliances including, kitchen appliances, televisions, radios, and/or refrigerators and/or heating equipment.

15. A computer program product tangibly embodied in a non-transitory machine-readable storage medium including code instructions that, when executed by at least one processor of a computer system implements the method of claim 1.
